# EUROPÄISCHE PATENTSCHRIFT

(11) **EP 4 018 832 B1**
(45) Veröffentlichungstag und Bekanntmachung des Hinweises auf die Patenterteilung: **26.06.2024**
(21) Anmeldenummer: 21213740.0
(22) Anmeldetag: 10.12.2021
(51) Int. Cl.: A21C 5/02, A21C 7/00

(54) **TEIGWIRKEINRICHTUNG**
DOUGH KNEADING DEVICE
AGENCEMENT DE TRAVAIL DE PÂTE

(30) Priorität: 23.12.2020 DE 102020216527
(43) Veröffentlichungstag der Anmeldung: 29.06.2022
(73) Patentinhaber: BackNet GmbH, 33649 Bielefeld (DE)
(72) Erfinder: Meier, Alexander, 91602 Dürrwangen (DE)
(74) Vertreter: Rau, Schneck & Hübner Patentanwälte Rechtsanwälte PartGmbB

(56) Entgegenhaltungen:
- EP-A1- 0 624 316
- EP-B1- 0 391 017
- WO-A1-2018/064700
- US-B2- 8 096 699

## Beschreibung

Die vorliegende Patentanmeldung nimmt die Priorität der deutschen Patentanmeldung DE 10 2020 216 527.0 in Anspruch.

Die Erfindung betrifft eine Teigwirkeinrichtung nach dem Oberbegriff des Anspruchs 1.

Eine derartige Teigwirkeinrichtung ist bekannt aus der EP 3 363 291 B1. Die DE-PS 1 053 437 offenbart ein Wirkband aus flexiblem Stoff für Teigwirkmaschinen. Die EP 0 624 316 A1 offenbart ein Verfahren und eine Vorrichtung zur Verringerung von Mehlstaub bei kombinierten Teigteil- und Rundwirkmaschinen. Die EP 0 391 017 B1 offenbart eine Maschine zum Rundwirken von Teigstücken. Die WO 2018/064 700 A1 offenbart eine schwenkbare Bandumlenkung für eine Übergabe von Teigkammern in einer Wirkvorrichtung für Teigteil- und Wirkmaschinen. Die US 8,096,699 B2 offenbart eine Teigbearbeitungsmaschine.

Es ist eine Aufgabe der vorliegenden Erfindung, eine Teigwirkeinrichtung der eingangs genannten Art derart weiterzubilden, dass auch feuchte Teige möglichst ohne Einsatz von Antihaftmitteln gewirkt werden können, ohne dass der Teig unerwünscht am Wirkband und/oder an den Wirkkammern anhaftet.

Diese Aufgabe ist erfindungsgemäß gelöst durch eine Teigwirkeinrichtung mit den im Anspruch 1 angegebenen Merkmalen.

Erfindungsgemäß wurde erkannt, dass über den Einsatz eines Wirkbandes mit Durchtrittsöffnungen eine Kontaktfläche zwischen dem Wirkband und den zu wirkenden Teiglingen beim Betrieb der Teigwirkeinrichtung reduziert werden kann. Dies führt überraschenderweise nicht zu einem Verkleben der Durchtrittsöffnungen, sondern tatsächlich zu einer verringerten Anhaftung der zu wirkenden Teiglinge am Wirkband, so dass ein unerwünschtes Verkleben der Teiglinge an Wirkkomponenten der Teigwirkeinrichtung verringert bzw. ganz vermieden ist. Eine Obergrenze eines typischen Durchmessers der Durchtrittsöffnungen von 12 mm hat sich als besonders geeignet herausgestellt, um einerseits ein Verkleben der Durchtrittsöffnungen und andererseits ein Vermeiden eines unerwünschten Teigling-Anhaftens zu erreichen.

Die Durchtrittsöffnungen sind dabei insbesondere so groß, dass eine zumindest gewisse Luftdurchlässigkeit des Wirkbandes erreicht ist. Der typische Durchmesser der Durchtrittsöffnungen ist der Durchmesser eines Kreises mit gleichem Flächeninhalt wie die jeweilige Durchtrittsöffnungs-Fläche. Der typische Durchmesser der Durchtrittsöffnungen kann kleiner sein als 10 mm, kann kleiner sein als 8 mm und kann auch kleiner sein als 5 mm. Der typische Durchmesser der Durchtrittsöffnungen kann größer sein als 0,1 mm.

Die Durchtrittsöffnungen dienen zur Verringerung einer Kontaktfläche zwischen dem Wirkband und den zu wirkenden Teiglingen.

Ein typischer Durchmesser der Durchtrittsöffnungen des Wirkbandes ist größer als 0,5 mm.

Ein gewebtes Wirkband nach Anspruch 2 mit Durchtrittsöffnungen zwischen den Kett- und/oder den Schussfäden führt ebenfalls zu einer erwünschten Reduzierung der Kontaktfläche des Wirkbandes an den zu wirkenden Teiglingen und zu einer Reduzierung der Anhaftungsneigung.

Eine Untergrenze für den typischen Durchtrittsöffnungs-Durchmesser nach Anspruch 3 hat sich als besonders vorteilhaft herausgestellt. Der typische Durchmesser kann größer sein als 1 mm und kann auch größer sein als 2 mm.

Durchtrittsöffnungs-Ausführungen nach Anspruch 4 haben sich einerseits in der Praxis bewährt und sind andererseits mit vertretbarem Aufwand herstellbar. Alternativ oder zusätzlich können die Durchtrittsöffnungen hexagonal ausgeführt sein. Bei einer mehreckigen Ausführung der Durchtrittsöffnungen können diese gleiche und ungleiche Seitenlängen aufweisen. Auch eine Teilung von Durchtrittsöffnungen durch Mittelstege oder Querstreben ist möglich, wobei sich der typische Durchmesser dann auf die hierdurch entstehenden Teil-Durchtrittsöffnungen bezieht.

Anordnungen der Durchtrittsöffnungen nach den Ansprüchen 5 und 6 verringern zusätzlich eine Verklebungsneigung, da hierüber ermöglicht wird, dass ein bestimmter äußerer Flächenabschnitt des Teiglings mit gleicher Wahrscheinlichkeit vom Wirkband im Bereich einer Durchtrittsöffnung oder im Bereich zwischen den Durchtrittsöffnungen beim Wirken mitgenommen wird. Dies reduziert erfahrungsgemäß eine Verklebungs- bzw. Anhaftungsneigung des Teigs.

Auch eine komplette Zufallsverteilung der Anordnung der Durchtrittsöffnungen oder auch eine in sonstiger Weise unregelmäßige und/oder asymmetrische und/oder aperiodische Durchtrittsöffnungs-Anordnung ist möglich.

Entsprechende Vorteile hat ein Wirkband nach Anspruch 7.

Mindestens ein Gebläse nach Anspruch 8 reduziert eine Anhaftungs- und/oder Verklebungsneigung des Teigs zusätzlich.

Bei der Trocknungsluft kann es sich je nach Gebläseausführung um Kaltluft und/oder um Warmluft handeln. Eine Temperatur der Trocknungsluft kann höchstens 60° betragen. Eine Luftmenge der Trocknungsluft kann größer sein als 50 m³/h und kann insbesondere größer sein als 200 m³/h, 500 m³/h oder 1000 m³/h. Die Luftmenge ist regelmäßig kleiner als 3000 m³/h.

Beispielsweise bei festeren oder fett-/ölhaltigen Teigen können diese Teiglinge auch ohne Gebläse aufgearbeitet werden. Dies gilt generell für Teige mit niedrigen Teigausbeuten, bei denen eine vergleichsweise geringe Flüssigkeitsmenge pro Teiggewicht bei der Teigherstellung verwendet wird.

Gebläseanordnungen nach den Ansprüchen 9 bis 11 haben sich dabei zur Reduzierung einer Anhaftungs- und/oder Verklebungsneigung besonders bewährt.

Die Vorteile einer Teigteil- und Wirkvorrichtung nach Anspruch 12 entsprechen denjenigen, die vorstehend unter Bezugnahme auf die Teigwirkeinrichtung bereits erläutert wurden.

Weitere Merkmale, Einzelheiten und Vorteile der Erfindung ergeben sich aus der nachfolgenden Beschreibung eines Ausführungsbeispiels anhand der beigefügten Zeichnungen. Es zeigen:
- Fig. 1: eine schematische Seitenansicht einer als Teigteil/Wirkvorrichtung ausgebildeten Teig-Bearbeitungsanlage mit Teigteileinrichtung, Übergabeeinrichtung und Teigwirkeinrichtung mit einer Wirktrommel und einem Wirkband;
- Fig. 2: Details einer Wirkband-Führung der Teigwirkeinrichtung sowie einer Anordnung von Gebläsen zum Anblasen des Wirkbandes sowie von Wirkkammern mit Trocknungsluft;
- Fig. 3: eine Ansicht der Wirktrommel/Wirkband-Kombination nach Fig. 2 aus Blickrichtung III in Fig. 2, wobei die Gebläse nicht dargestellt sind;
- Fig. 4: eine gebrochene Aufsicht auf die Wirkband/Wirktrommel-Kombination nach Fig. 2 aus Blickrichtung IV in Fig. 2, wobei die Gebläse nicht dargestellt sind;

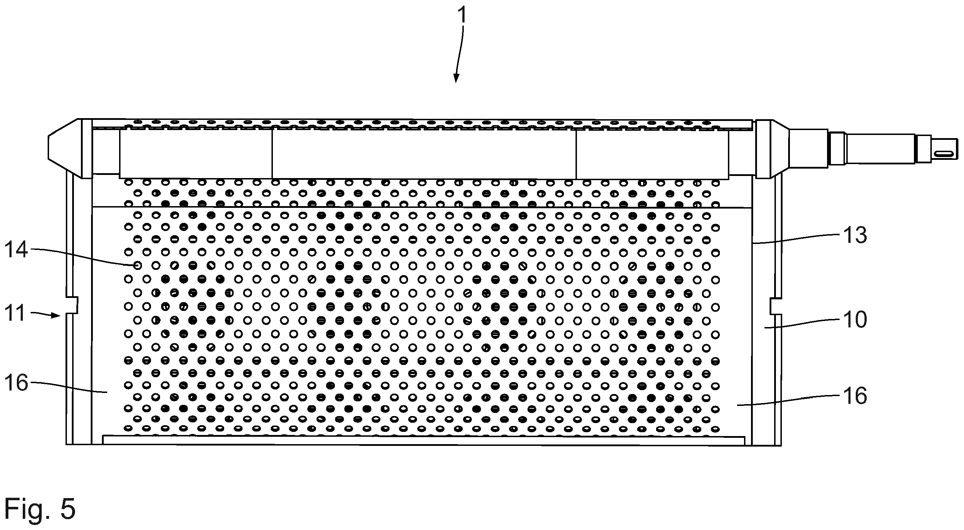

- Fig. 5: eine geschnittene Detailansicht gemäß Linie V-V in Fig. 2 mit einem Umfangsabschnitt der Wirktrommel, an der das Wirkband anliegt; und

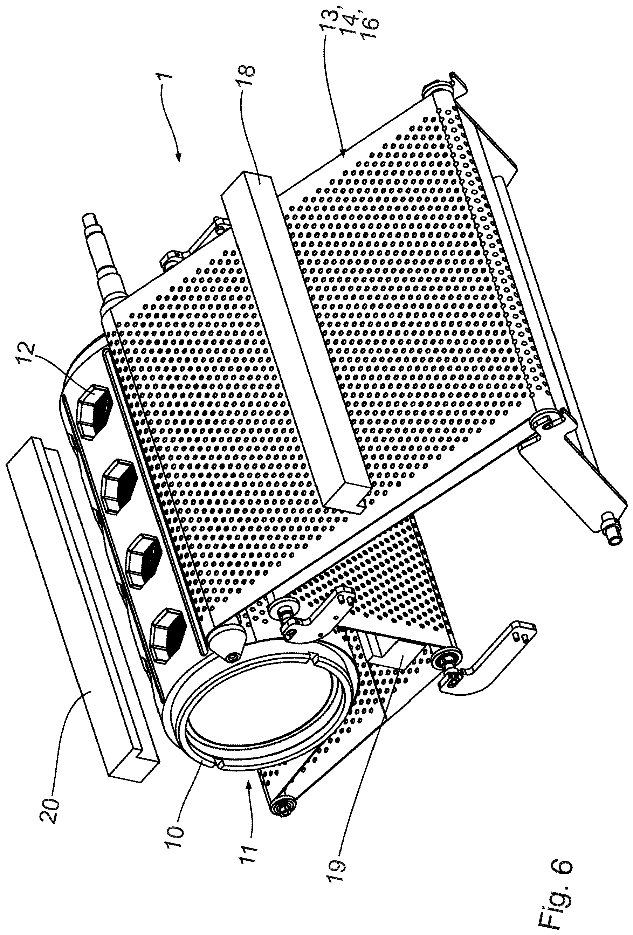

- Fig. 6: perspektivisch die Anordnung nach Fig. 2 einschließlich der Gebläse.

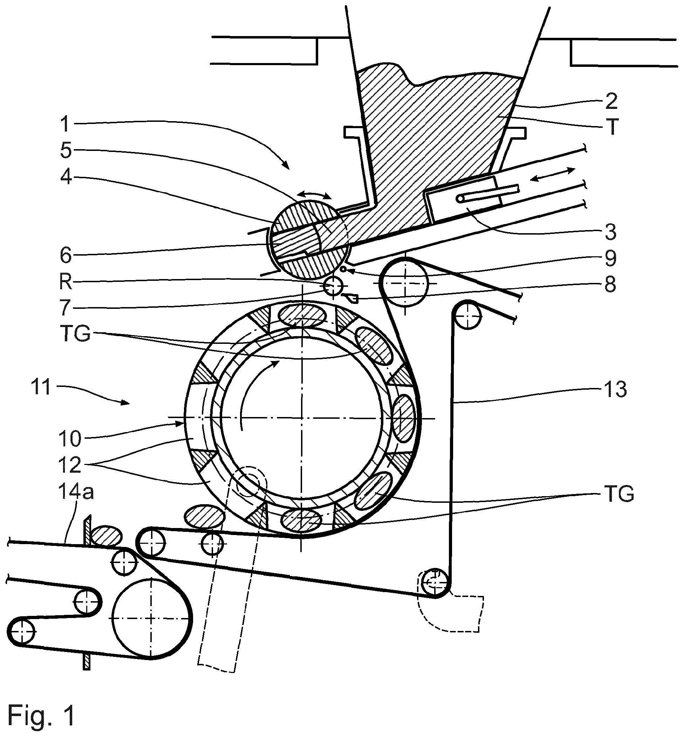

Eine Teig-Bearbeitungsanlage nach Fig. 1, ausgebildet als Teigteil/Wirkvorrichtung, hat eine übliche Teigteileinrichtung 1 mit einem Vorratstrichter 2 für den Teig T, einem darunter angeordneten Schieber 3 und einer Portioniertrommel 4. Über den Schieber 3 wird eine Teilmenge des Teigs T abgeschert und in eine von einem Auswurfkolben 6 begrenzte Portionierkammer 5 in der Portioniertrommel 4 gefüllt. Durch Drehung der Portioniertrommel 4 entgegen dem bzw. im Uhrzeigersinn bezogen auf Fig. 1 wird die Portionierkammer 5 in eine nach unten gerichtete Drehstellung verbracht und gleichzeitig der Auswurfkolben 6 in radialer Richtung bewegt, so dass der in der Portionierkammer 5 befindliche Teigling TG nach unten ausgestoßen wird.

Die Teig-Bearbeitungsanlage ist vierreihig ausgeführt, kann also vier parallel zugeführte Reihen von Teiglingen separat teilen, portionieren und wirken. Je nach Ausführung kann die Teig-Bearbeitungsanlage auch einreihig oder mit einer anderen Anzahl von Reihen ausgeführt sein.

Zur Unterstützung der Trennung des Teiglings TG vom Auswurfkolben 6 ist unterhalb der Portioniertrommel 4 neben der Auswurfposition des Teiglings TG eine entgegen dem bzw. im Uhrzeigersinn bezogen auf Fig. 1 rotierend angetriebene Abwerfwalze 7 angeordnet, deren Rotationsachse R parallel zur Rotationsachse der Portioniertrommel 4 gerichtet ist. Die Abwerfwalze 7 wirkt auf den aus der Portionierkammer 5 austretenden Teigling TG in einer Weise, dass er vom Auswurfkolben 6 abgelöst wird.

Auf der der Portioniertrommel 4 abgewandten Seite der Abwerfwalze 7 ist parallel zu dieser ein Abstreifer 8 angeordnet, der einem Verkleben der Abwerfwalze 7 entgegenwirkt. Ferner ist oberhalb der Abwerfwalze 7 eine Beölungseinrichtung 9 vorgesehen.

Unterhalb von Portioniertrommel 4 und Abwerfwalze 7 ist eine Wirktrommel 10 einer Teigwirkeinrichtung 11 der Teig-Bearbeitungsanlage angeordnet. Die Wirktrommel 10 weist über ihren Umfang verteilte Wirckammern 12 sowie ein über einen Teilumfang der Wirktrommel 10 laufendes Wirkband 13 auf. Das Wirkband 13 liegt über einen Umfangsabschnitt an der Wirktrommel 10 an. Die Wirktrommel 10 dient zur Vorgabe von seitlichen Begrenzungen, also von Seitenwänden der Wirkkammern 12 und zur Vorgabe einer radial inneren Begrenzung für die Wirkkammern 12, also zur Vorgabe von Böden der Wirkkammern 12. Das äußere Wirkband 13 dient zur Vorgabe einer radial äußeren Begrenzung für die Wirkkammern 12. Das Wirkband 13 dient zum Verschließen der Wirkkammern 12 im Bereich des Anlage-Umfangsabschnitts.

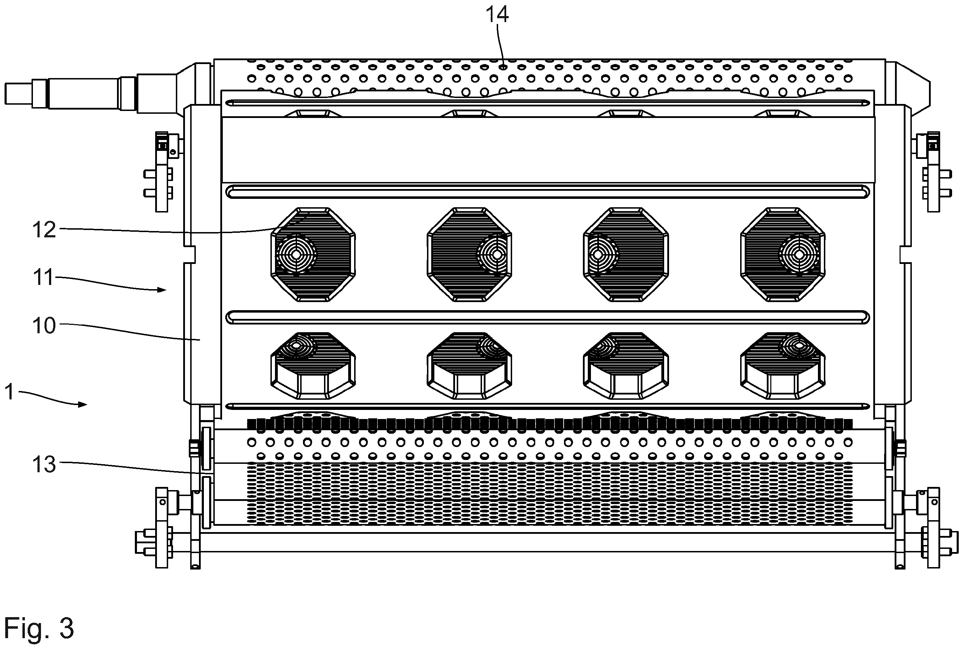

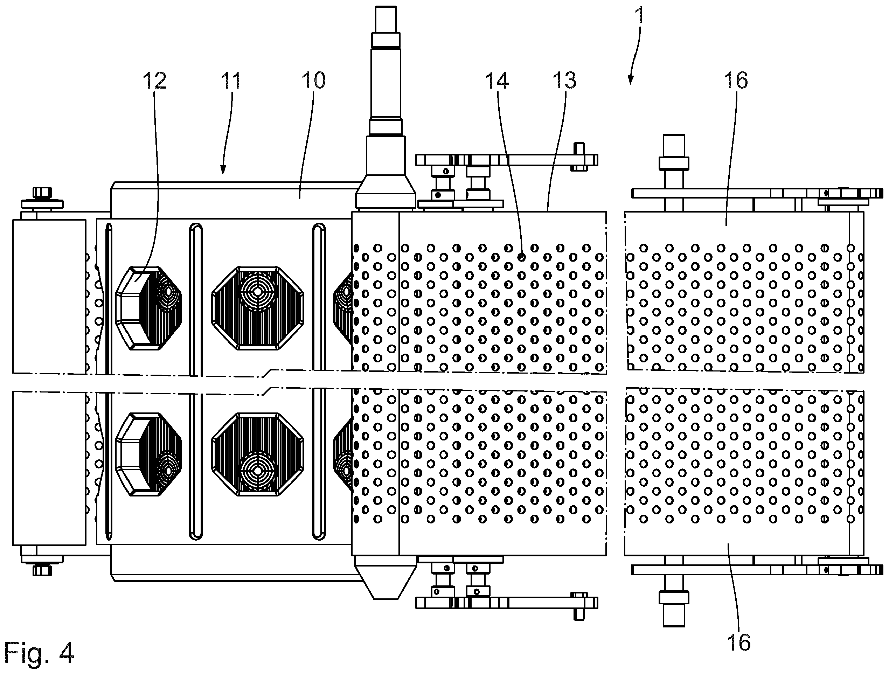

Die Wirkkammern 12 haben einen sechseckigen Querschnitt (vgl. insbesondere Fig. 3 und 4). Dieser Querschnitt kann auch rund oder rechteckig oder in anderer Weise mehreckig sein.

Beim Befüllen fällt in die Wirkkammern 12 jeweils ein Teigling TG nach dem Ablösen von der Portioniertrommel 4. Während der Rotation der Wirktrommel 10 im Uhrzeigersinn bezogen auf Fig. 1 wird jeder Teigling TG in üblicher Weise einer Wirkbehandlung unterzogen und anschließend vereinzelt zueinander über ein Ablaufband 14a zur nächsten Bearbeitungsstation transportiert.

Das Wirkband 13 hat eine Vielzahl von Durchtrittsöffnungen 14 mit einem typischen Öffnungsdurchmesser, der kleiner ist als 12 mm. Dieser typische Durchmesser der Durchtrittsöffnungen 14 kann 5 mm betragen.

Der typische Durchmesser der Wirkkammern 12 ist der Durchmesser einer Kugel mit gleichem Volumen wie das Volumen der jeweiligen Wirkkammer 12.

Der typische Durchmesser der jeweiligen Durchtrittsöffnung 14 ist der Durchmesser eines Kreises mit gleichem Flächeninhalt wie die Fläche dieser Durchtrittsöffnung 14.

Die Durchtrittsöffnungen 14 können einen Durchmesser im Bereich z. B. zwischen 0,5 mm und 12 mm haben.

Die Durchtrittsöffnungen 14 können im Querschnitt rund oder mehreckig ausgeführt sein. Die Durchtrittsöffnungen 14 können im Querschnitt hexagonal ausgeführt sein. Bei einer mehreckigen Ausführung der Durchtrittsöffnungen 14 können diese durch Seiten mit gleichen und ungleichen Seitenlänge begrenzt sein, beispielsweise quadratisch oder als regelmäßiges Sechseck. Die Durchtrittsöffnungen 14 können auch dreieckig oder oval oder auch ungleichmäßig berandet ausgeführt sein. Die Ecken dieser Durchtrittsöffnungen 14 können abgerundet sein.

Die Durchtrittsöffnungen 14 im Wirkband 13 sind nach Art eines hexagonalen Gitters angeordnet. Auch andere Anordnungen, z. B. zeilen- und/oder spaltenweise, der Durchtrittsöffnungen 14 auf dem Wirkband 13 sind möglich. Die Anordnung der Durchtrittsöffnungen 14 auf dem Wirkband 13 ist bevorzugt so, dass zumindest einige von in einer Laufrichtung 15 des Wirkbandes 13 aufeinanderfolgende Durchtrittsöffnungs-Zeilen, die quer zur Laufrichtung 15 verlaufen, gegeneinander versetzt angeordnet sind. Auch eine komplette Zufallsverteilung oder eine in sonstiger Weise unregelmäßige/asymmetrische/aperiodische Durchtrittsöffnungs-Anordnung ist möglich.

Bei einer Variante des Wirkbandes 13 kann dieses mehrere Typen verschieden großer Durchtrittsöffnungen 14 aufweisen.

Aufgrund der Durchtrittsöffnungen 14 wird eine Kontaktoberfläche des Wirkbandes 13 reduziert, mit dem das Wirkband 13 mit den zu wirkenden Teiglingen in Kontakt tritt.

Das Wirkband 13 ist in quer zur Laufrichtung 15 verlaufenden randseitigen Kantenbereichen 16 durchgehend, also ohne Durchtrittsöffnungen, ausgeführt.

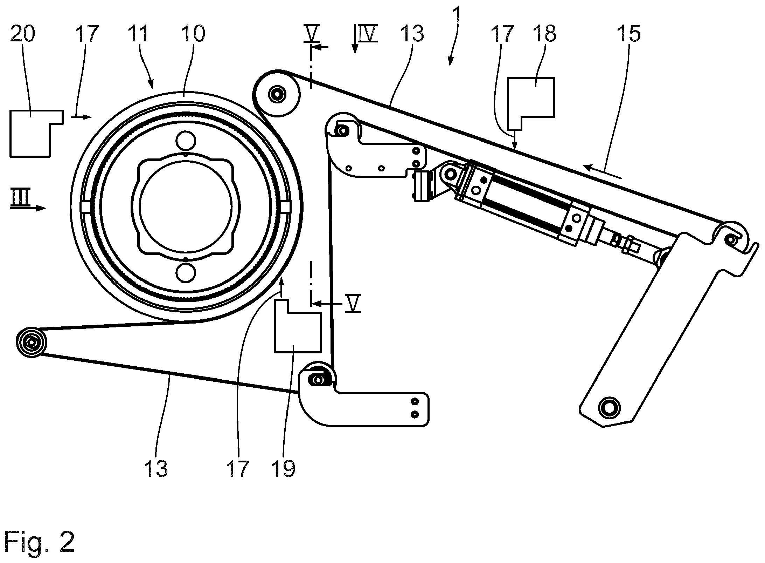

Zum Anblasen des Wirkbandes 13 und der Wirkkammern 12 mit Trocknungsluft 17 (vgl. Fig. 2) dienen mehrere Gebläse 18, 19, 20 der Teigwirkeinrichtung 11. Als Trocknungsluft 17 kann mit Hilfe der Gebläse 18 bis 20 vorgewärmte oder auch nicht vorgewärmte Luft zum Einsatz kommen.

Eines dieser Gebläse, das Gebläse 18, ist oberhalb eines Wirkbandabschnitts stromaufwärts des Anlage-Umfangsabschnitts an der Wirktrommel 10 und gegenüberliegend einer pneumatischen Spanneinrichtung zum Spannen des Wirkbandes 13 angeordnet, die in der Fig. 2 dargestellt ist. Dieses Gebläse 18 ist so angeordnet, dass die Trocknungsluft 17 ausschließlich das Wirkband 13, nicht aber die Wirkkammern 12 beaufschlagt. Mit dem Gebläse 18 wird das Wirkband 13 vor der umfangsseitigen Anlage an der Wirktrommel 10 getrocknet.

Das weitere Gebläse 19 ist unterhalb des Umfangsabschnitts angeordnet, über den das Wirkband 13 an der Wirktrommel 10 zum Verschließen der Wirkkammern 12 anliegt. Dieses Gebläse 19 beaufschlagt also einerseits das Wirkband 13 im Anlage-Umfangsabschnitt an der Wirktrommel 10 und, da die beaufschlagende Trocknungsluft 17, die vom Gebläse 19 abgegeben wird, die Durchtrittsöffnungen 14 des Wirkbandes 13 durchdringt, auch die Wirkkammern 12 und die hierin befindlichen Teiglinge TG (vgl. Fig. 1).

Das weitere Gebläse 20 ist im Bereich des weiteren Umfangsabschnitts der Wirktrommel 10 angeordnet, über den das Wirkband 13 nicht an der Wirktrommel 10 anliegt. Die Trocknungsluft 17, die vom Gebläse 20 abgegeben wird, beaufschlagt somit ausschließlich die Wirkkammern, nachdem die gewirkten Teiglinge aus den Wirkkammern 12 ausgetreten sind. Das Gebläse 20 dient somit zur Trocknung der Wirkkammern 12, bevor diese wieder mit Teiglingen TG zum Wirken befüllt werden.

Die Durchtrittsöffnungen 14 im Wirkband 13 führen dazu, dass beim Wirken der Teiglinge in den Wirkkammern 12 ein Verkleben der Teiglinge TG am Wirkband 13 verringert bzw. ganz vermieden ist. Eine Kontaktfläche zwischen dem Wirkband 13 und dem jeweiligen Teigling ist beim Wirken im Vergleich zu einem Wirkband ohne Durchtrittsöffnungen reduziert. Eine Zugabe von Mehl zur Vermeidung des Anhaftens der Teiglinge insbesondere am Wirkband 13 kann reduziert oder sogar ganz vermieden werden.

Soweit bei bestimmten, feuchteren Teigsorten eine Verklebungsneigung der Teiglinge am Wirkband 13 und/oder an den sonstigen Wänden der Wirkkammern 12 besteht, kann mindestens eines der vorstehend beschriebenen Gebläse 18 bis 20 zum Einsatz kommen oder es können zwei dieser Gebläse oder auch alle drei dieser Gebläse zum Einsatz kommen. Das Gebläse 18 kann dabei zu einer Vortrocknung des Wirkbandes 13 eingesetzt werden, so dass dieses dann, wenn es zum Wirken der Teiglinge TG in den Wirkkammern 12 mit diesen in Kontakt kommt, trocken ist, was eine Verklebungsneigung verringert. Das alternativ oder zusätzlich eingesetzte Gebläse 19 sorgt einerseits für eine Trocknung des Wirkbandes 13 und andererseits für eine Trocknung der weiteren Wände der Wirkkammern 12, da die Trocknungsluft 17 die Durchtrittsöffnungen 14 im Wirkband 13 durchtritt. Gleichzeitig sorgt die Trocknungsluft 17, die vom Gebläse 19 abgegeben wird, auch für eine Antrocknung der Teiglinge TG, was auch als Ansteifen bezeichnet wird. Diese Trocknungsmaßnahmen durch das Gebläse 19 führen alle zu einer Verringerung einer Verklebungsneigung der Teiglinge TG an den Wänden der Wirkkammern 12 sowie am Wirkband 13. Das ebenfalls alternativ oder zusätzlich einsetzbare Gebläse 20 sorgt für eine Vortrocknung der Wirkkammern 12, bevor diese wiederum mit Teiglingen TG befüllt werden. Eine Anhaftungsneigung der Teiglinge TG an den dann getrockneten Wänden der Wirkkammern 12 ist somit verringert oder ganz vermieden.

Bei einer alternativen Ausführung ist das Wirkband 13 als gewebtes Band ausgeführt. Die Durchtrittsöffnungen nach Art der Durchtrittsöffnungen 14 liegen dann zwischen den Kett- und/oder den Schussfäden eines Gewebes des Wirkbandes 13. Die Durchtrittsöffnungen sind dabei so groß, dass sich eine Luftdurchlässigkeit des Wirkbandes 13 ergibt.

Mit der Teigwirkeinrichtung 11 können Teiglinge TG gewirkt werden, bei denen bei der Teigherstellung mehr als 45 1 Flüssigkeit auf 100 kg Teig kommen, z. B. 52, 55, 62 oder mehr als 62 1 Flüssigkeit auf 100 kg Teig. Anteilig anzurechnen auf die Flüssigkeitsmenge sind auch halbflüssige und pastöse Zutaten wie z. B. Flüssigei, Butter oder Margarine.

## Patentansprüche

1. Teigwirkeinrichtung (11),
- mit einer Wirktrommel (10) zur Vorgabe von Böden und Seitenwänden von Wirkkammern (12) zur Aufnahme von zu wirkenden Teiglingen (TG),
- mit einem Wirkband (13), welches über einen Umfangsabschnitt an der Wirktrommel (10) zum Verschließen der Wirkkammern (12) anliegt,
**dadurch gekennzeichnet, dass**
- das Wirkband (13) eine Vielzahl von Durchtrittsöffnungen (14) mit einem Durchmesser aufweist, der kleiner ist als 12 mm, wobei das Wirkband (13) mit den Durchtrittsöffnungen (14) derart ausgeführt ist, dass über den Einsatz des Wirkbandes (13) mit den Durchtrittsöffnungen (14) eine Kontaktfläche zwischen dem Wirkband (13) und den zu wirkenden Teiglingen (TG) beim Betrieb der Teigwirkeinrichtung (11) reduziert ist,
- wobei der Durchmesser der Durchtrittsöffnungen (14) größer ist als 0,5 mm.

2. Teigwirkeinrichtung nach Anspruch 1, **dadurch gekennzeichnet, dass** das Wirkband (13) als gewebtes Band ausgeführt ist, wobei die Durchtrittsöffnungen (14) zwischen den Kett- und/oder den Schussfäden eines Gewebes des Wirkbandes (13) vorliegen.

3. Teigwirkeinrichtung nach Anspruch 1, **dadurch gekennzeichnet, dass** der Durchmesser der Durchtrittsöffnungen (14) größer ist als 1 mm.

4. Teigwirkeinrichtung nach einem der Ansprüche 1 bis 3, **dadurch gekennzeichnet, dass** die Durchtrittsöffnungen (14) rund, mehreckig (Ecken auch mit oder ohne Radius), gleich- und ungleichschenkelige Seitenlängen, oval, mit Langloch (gleich- und ungleich) ausgeführt sind.

5. Teigwirkeinrichtung nach einem der Ansprüche 1 bis 4, **dadurch gekennzeichnet, dass** die Durchtrittsöffnungen (14) nach Art eines hexagonalen Gitters angeordnet sind.

6. Teigwirkeinrichtung nach einem der Ansprüche 1 bis 4, **dadurch gekennzeichnet, dass** die Durchtrittsöffnungen (14) zeilen- und/oder spaltenweise angeordnet sind, wobei zumindest einige von in Laufrichtung (15) des Wirkbandes (13) aufeinanderfolgende Durchtrittsöffnungs-Zeilen, die quer zur Laufrichtung (15) verlaufen, gegeneinander versetzt angeordnet sind.

7. Teigwirkeinrichtung nach einem der Ansprüche 1 bis 6, **dadurch gekennzeichnet, dass** das Wirkband (13) mehrere Typen verschieden großer Durchtrittsöffnungen (14) aufweist.

8. Teigwirkeinrichtung nach einem der Ansprüche 1 bis 7, **gekennzeichnet durch** mindestens ein Gebläse (18, 19, 20) zum Anblasen des Wirkbandes (13) und/oder der Wirkkammern (12) mit Trocknungsluft (17).

9. Teigwirkeinrichtung nach Anspruch 8, **dadurch gekennzeichnet, dass** mindestens eines der Gebläse (18) derart angeordnet ist, dass die Trocknungsluft (17) ausschließlich das Wirkband (13) beaufschlagt.

10. Teigwirkeinrichtung nach einem der Ansprüche 1 bis 9, **dadurch gekennzeichnet, dass** mindestens eines der Gebläse (20) derart angeordnet ist, dass die Trocknungsluft (17) ausschließlich die Wirkkammern (12) beaufschlagt.

11. Teigwirkeinrichtung nach einem der Ansprüche 1 bis 10, **dadurch gekennzeichnet, dass** mindestens eines der Gebläse (19) derart angeordnet ist, dass die Trocknungsluft (17) die Wirkkammern (12) in dem Umfangsabschnitt beaufschlagt, über den das Wirkband (13) an der Wirktrommel (10) zum Verschließen der Wirkkammern (12) anliegt.

12. Teigteil- und Wirkvorrichtung mit einer Teigteileinrichtung (1) und einer Teigwirkeinrichtung (11) nach einem der Ansprüche 1 bis 11.

## Claims

1. Dough kneading device (11),
- with a kneading drum (10) for predefining the bottoms and side walls of kneading chambers (12) for receiving dough pieces (TG) to be kneaded,
- with a kneading belt (13) which over a circumferential portion abuts the kneading drum (10) for closing the kneading chambers (12),
**characterized in that**
- the kneading belt (13) has a plurality of passage openings (14) with a diameter which is smaller than 12 mm, wherein the kneading belt (13) with the passage openings (14) is designed in such a way that, via the use of the kneading belt (13) with the passage openings (14), a contact surface between the kneading belt (13) and the dough pieces (TG) to be kneaded is reduced during operation of the dough kneading device (11),
- wherein the diameter of the passage openings (14) is larger than 0.5 mm.

2. Dough kneading device according to claim 1, **characterized in that** the kneading belt (13) is designed as a woven belt, wherein the passage openings (14) are present between the warp and/or the weft yarns of a fabric of the kneading belt (13).

3. Dough kneading device according to claim 1, **characterized in that** the diameter of the passage openings (14) is larger than 1 mm.

4. Dough kneading device according to any one of claims 1 to 3, **characterized in that** the passage openings (14) are embodied in a round, polygonal shape (corners also with or without radius), of equal and unequal side lengths, or in an oval shape, with an elongated hole (equal and unequal).

5. Dough kneading device according to any one of claims 1 to 4, **characterized in that** the passage openings (14) are arranged in the manner of a hexagonal grid.

6. Dough kneading device according to any one of claims 1 to 4, **characterized in that** the passage openings (14) are arranged in rows and/or columns, wherein at least some of the passage opening rows succeeding one another in the running direction (15) of the kneading belt (13) and extending transversely to the running direction (15) are arranged offset with from one another.

7. Dough kneading device according to any one of claims 1 to 6, **characterized in that** the kneading belt (13) has multiple types of passage openings (14) of different sizes.

8. Dough kneading device according to any one of claims 1 to 7, **characterized by** at least one blower (18, 19, 20) for blowing drying air (17) onto the kneading belt (13) and/or the kneading chambers (12).

9. Dough kneading device according to claim 8, **characterized in that** at least one of the blowers (18) is arranged in such a way that the drying air (17) exclusively impinges on the kneading belt (13).

10. Dough kneading device according to any one of claims 1 to 9, **characterized in that** at least one of the blowers (20) is arranged in such a way that the drying air (17) exclusively impinges on the kneading chambers (12).

11. Dough kneading device according to any one of claims 1 to 10, **characterized in that** at least one of the blowers (19) is arranged in such a way that the drying air (17) impinges on the kneading chambers (12) in the circumferential portion over which the kneading belt (13) abuts the kneading drum (10) for closing the kneading chambers (12).

12. Dough dividing and kneading device with a dough dividing device (1) and a dough kneading device (11) according to any one of claims 1 to 11.

## Revendications

1. Dispositif de pétrissage de pâte (11),
- avec un tambour de pétrissage (10) pour prédéfinir les fonds et les parois latérales de chambres de pétrissage (12) destinées à recevoir les pâtons (TG) à pétrir,
- avec une bande de pétrissage (13) qui s'applique sur une section périphérique contre le tambour de pétrissage (10) pour fermer les chambres de pétrissage (12),
**caractérisé en ce que**
- la bande de pétrissage (13) présente une pluralité d'ouvertures de passage (14) avec un diamètre qui est inférieur à 12 mm, la bande de pétrissage (13) avec les ouvertures de passage (14) étant réalisée de telle sorte que, par l'intermédiaire de l'utilisation de la bande de pétrissage (13) avec les ouvertures de passage (14), une surface de contact entre la bande de pétrissage (13) et les pâtons (TG) à pétrir est réduite lors du fonctionnement du dispositif de pétrissage de pâte (11),
- le diamètre des ouvertures de passage (14) étant supérieur à 0,5 mm.

2. Dispositif de pétrissage de pâte selon la revendication 1, **caractérisé en ce que** la bande de pétrissage (13) est réalisée sous forme de bande tissée, les ouvertures de passage (14) étant présentes entre les fils de chaîne et/ou les fils de trame d'un tissu de la bande de pétrissage (13).

3. Dispositif de pétrissage de pâte selon la revendication 1, **caractérisé en ce que** le diamètre des ouvertures de passage (14) est supérieur à 1 mm.

4. Dispositif de pétrissage de pâte selon l'une quelconque des revendications 1 à 3, **caractérisé en ce que** les ouvertures de passage (14) sont conçues à être rondes, polygonales (coins également avec ou sans rayon), de longueur de côté égale ou inégale, ovales, avec trou oblong (égal ou inégal).

5. Dispositif de pétrissage de pâte selon l'une quelconque des revendications 1 à 4, **caractérisé en ce que** les ouvertures de passage (14) sont disposées à la manière d'une grille hexagonale.

6. Dispositif de pétrissage de pâte selon l'une quelconque des revendications 1 à 4, **caractérisé en ce que** les ouvertures de passage (14) sont disposées en lignes et/ou en colonnes, au moins certaines des lignes d'ouvertures de passage qui se succèdent dans la direction de marche (15) de la bande de pétrissage (13) et qui s'étendent transversalement à la direction de marche (15) étant décalées les unes par rapport aux autres.

7. Dispositif de pétrissage de pâte selon l'une quelconque des revendications 1 à 6, **caractérisé en ce que** la bande de pétrissage (13) présente plusieurs types d'ouvertures de passage (14) de tailles différentes.

8. Dispositif de pétrissage de pâte selon l'une quelconque des revendications 1 à 7, **caractérisé par** au moins une soufflerie (18, 19, 20) pour souffler de l'air de séchage (17) sur la bande de pétrissage (13) et/ou les chambres de pétrissage (12).

9. Dispositif de pétrissage de pâte selon la revendication 8, **caractérisé en ce qu'**au moins l'une des souffleries (18) est disposée de telle sorte que l'air de séchage (17) alimente exclusivement la bande de pétrissage (13).

10. Dispositif de pétrissage de pâte selon l'une quelconque des revendications 1 à 9, **caractérisé en ce qu'**au moins l'une des souffleries (20) est disposée de telle sorte que l'air de séchage (17) alimente exclusivement les chambres de pétrissage (12).

11. Dispositif de pétrissage de pâte selon l'une quelconque des revendications 1 à 10, **caractérisé en ce qu'**au moins l'une des souffleries (19) est disposée de telle sorte que l'air de séchage (17) alimente les chambres de pétrissage (12) dans la section périphérique par laquelle la bande de pétrissage (13) s'applique contre le tambour de pétrissage (10) pour fermer les chambres de pétrissage (12).

12. Dispositif de division et de pétrissage de pâte comprenant un dispositif de division de pâte (1) et un dispositif de pétrissage de pâte (11) selon l'une quelconque des revendications 1 à 11.
